# EUROPEAN PATENT APPLICATION

(11) **EP 4 769 746 A1**
(43) Date of publication of application: **01.07.2026**
(21) Application number: 25845302.6
(22) Date of filing: 21.07.2025
(51) Int. Cl.: H01M 50/333, H01M 10/6556, H01M 10/613, H01M 50/367, H01M 50/289, H01M 50/375, H01M 50/502, H01M 50/383, H01M 50/249

(54) **BATTERY PACK AND VEHICLE INCLUDING SAME**

(30) Priority: 23.07.2024 KR 20240096927
(71) Applicant: LG Energy Solution, Ltd., Seoul 07335 (KR)
(72) Inventor: CHANG, Hyuk-Kyun, Daejeon 34122 (KR); KIM, Soo-Youl, Daejeon 34122 (KR)
(74) Representative: Plasseraud IP
(86) International application number: PCT/KR2025/010704
(87) International publication number: WO 2026/024017

(57) **Abstract**

A battery pack according to the present disclosure includes a battery assembly including a plurality of battery cells; a pack case having a housing space in which the battery assembly is housed; at least one first venting hole provided on a first side of the battery assembly; a venting space disposed on the first side of the first venting hole and provided in the pack case; and at least one open and closed member configured to be opened to bring the first venting hole and the venting space into communication with each other in response to an internal pressure of a preset magnitude or more being formed, the open and closed member being disposed corresponding to the first venting hole.

## Description

### TECHNICAL FIELD

The present disclosure relates to a battery pack and a vehicle including the same, and more particularly, to a battery pack for releasing venting gas completely and quickly and preventing backflow of venting gas, thereby effectively suppressing or preventing thermal propagation, and a vehicle including the same.

This application is based on and claims priority from Korean Patent Application No. 10-2024-0096927 filed on July 23, 2024, the disclosure of which is incorporated herein in its entirety by reference.

### BACKGROUND ART

Due to being easily applicable to different types of products and having electrical properties such as high energy density, secondary batteries are universally applied to not only portable devices but also electric vehicles (EV) or hybrid electric vehicles (HEV) that operate using electrical driving sources. Secondary batteries significantly reduce the use of fossil fuels, and in addition to the primary advantage, they do not generate by-products from the use of energy. From this perspective, secondary batteries are gaining attention as a new source of energy with improved eco-friendliness and higher energy efficiency.

The types of secondary batteries that are now used in a wide range of applications include lithium ion batteries, lithium polymer batteries, nickel cadmium batteries, nickel hydrogen batteries or nickel zinc batteries. When high output voltage is required, a plurality of battery cells may be connected in series to form a battery module or a battery pack. In addition, to increase the charge/discharge capacity, a plurality of battery cells may be connected in parallel to form a battery module or a battery pack. Accordingly, the number of battery cells included in the battery module or pack may be variously set according to the required output voltage or charge/discharge capacity.

When forming the battery pack by connecting the plurality of battery cells in series/in parallel, it is general to form a battery module including at least one battery cell and then form a battery pack or a battery rack using at least one battery module with an addition of other elements. Alternatively, recently, cell-to-pack type battery packs are manufactured by placing the plurality of battery cells directly in a pack housing without modularization.

However, the battery pack including the plurality of battery cells may be vulnerable to thermal chain reactions between the battery cells or battery modules. For example, when a thermal event such as thermal runaway occurs in any one battery cell, the thermal event may propagate to other battery cell or battery module. When thermal runaway propagation is not properly suppressed, the thermal event occurred in the specific battery cell may trigger a chain reaction in other battery cell or battery module, potentially causing explosions or fires.

In the case of the existing battery pack, when the thermal event occurs in the battery cell, high-temperature ejected materials, for example, high-temperature gases, flames and solid ejected materials may be released in the upward direction and/or the inward direction of the pack case. The existing battery pack is difficult to release the high-temperature ejected materials into the atmosphere completely and quickly, and the flow of the high temperature ejected materials back to the battery cell or battery module may accelerate the thermal propagation.

Therefore, there is an urgent need for development of a structure for releasing high-temperature ejected materials into the atmosphere completely and quickly and preventing the high-temperature ejected materials from flowing back to the same or different battery cell or battery module, thereby effectively suppressing or slowing down thermal propagation when a thermal event occurs in a battery cell.

### DISCLOSURE

### Technical Problem

The present disclosure is designed to address the above-described problems, and therefore the present disclosure is directed to providing a battery pack for effectively preventing backflow of venting gas, and a vehicle including the same.

The present disclosure is further directed to providing a battery pack for guiding venting gas in a specific direction, and a vehicle including the same.

The present disclosure is further directed to providing a battery pack for effectively suppressing thermal events, and a vehicle including the same.

The present disclosure is further directed to providing a battery pack for effectively preventing the spread of thermal events, and a vehicle including the same.

The present disclosure is further directed to providing a battery pack that allows design modification to appropriately adjust the magnitude of internal pressure of venting gas to open an open and closed member, and a vehicle including the same.

The present disclosure is further directed to providing a battery pack for minimizing internal damage, and a vehicle including the same.

The present disclosure is further directed to providing a battery pack with improved productivity and assembly efficiency, and a vehicle including the same.

The technical problems to be solved by the present disclosure are not limited to the above-described problems, and these and other problems will be clearly understood by those skilled in the art from the following description.

### Technical Solution

A battery pack according to the present disclosure includes a battery assembly including a plurality of battery cells; a pack case having a housing space in which the battery assembly is housed; at least one first venting hole provided on a first side of the battery assembly; a venting space disposed on the first side of the first venting hole and provided in the pack case; and at least one open and closed member configured to be opened to bring the first venting hole and the venting space into communication with each other in response to an internal pressure of a preset magnitude or more being formed, the open and closed member being disposed corresponding to the first venting hole.

The open and closed member may be closed to block the first venting hole and the venting space in response to the internal pressure of less than the preset magnitude being formed.

The open and closed member may be placed in close contact with the first venting hole by an elastic restoring force in response to the internal pressure of less than the preset magnitude being formed.

The open and closed member may include an open and closed cap disposed movably; a guide pin configured to guide the movement of the open and closed cap; and an elastic member secured to the guide pin and configured to apply pressure to the open and closed cap.

The open and closed cap may include a material having rigidity and fire resistance.

The battery pack according to the present disclosure may further include a bottom plate disposed between the battery assembly and the pack case, the bottom plate having a second venting hole corresponding to the first venting hole, and the open and closed member may be coupled to a location corresponding to the second venting hole on the first side of the bottom plate.

The bottom plate may include a material having rigidity and fire resistance.

The first side may be a downward direction.

The battery pack may further include a mounting block disposed between the battery assembly and the pack case, and the mounting block may separate the battery assembly from the pack case to form the venting space.

A direction opposite to the first side may be a second side, and the battery pack according to the present disclosure may further include a cooling member disposed on the second side of the battery assembly, the cooling member configured to cool the battery assembly.

The second side may be an upward direction.

The pack case may include a sidewall portion surrounding the housing space, and the sidewall portion may have a first venting channel in communication with the venting space.

The pack case may include a partition frame to partition the housing space, and the partition frame may have a second venting channel in communication with the venting space.

The pack case may include a venting device to connect the venting space to an outside.

The pack case may include a partition frame to partition the housing space, and the battery pack according to the present disclosure may include a plurality of battery assemblies housed in the housing space, and further include a connection busbar running across the partition frame, the connection busbar configured to electrically connect any one of the battery assemblies to the other; and a sealing member to seal the connection busbar.

A vehicle according to the present disclosure includes at least one battery pack according to the present disclosure.

### Advantageous Effects

According to the present disclosure, by the open and closed member, it may be possible to provide the battery pack for effectively preventing backflow of venting gas, and the vehicle including the same.

In addition, by the first venting hole and the open and closed member, it may be possible to provide the battery pack for guiding venting gas in a specific direction, and the vehicle including the same.

In addition, by the open and closed member, it may be possible to provide the battery pack for effectively suppressing thermal events, and the vehicle including the same.

In addition, by the open and closed member, it may be possible to provide the battery pack for effectively preventing the spread of thermal events, and the vehicle including the same.

In addition, by the open and closed member including the elastic member, it may be possible to provide the battery pack for preventing backflow of venting gas more effectively, and the vehicle including the same.

In addition, by the open and closed member including the elastic member, it may be possible to provide the battery pack that allows design modification to appropriately adjust the magnitude of internal pressure of venting gas to open the open and closed member, and the vehicle including the same.

In addition, by the open and closed member, it may be possible to provide the battery pack for minimizing internal damage, and the vehicle including the same.

In addition, by the bottom plate, it may be possible to provide the battery pack with improved productivity and assembly efficiency, and the vehicle including the same.

The effects of the present disclosure are not limited to the above-described effects, and these and other effects will be clearly understood by those skilled in the art from this specification and the accompanying drawings.

### BRIEF DESCRIPTION OF THE DRAWINGS

The accompanying drawings illustrate embodiments of the present disclosure and together with the following detailed description, serve to provide a better understanding of the technical aspects of the present disclosure, and thus the present disclosure should not be constructed as being limited to any of the drawings.
FIG. 1 is a perspective view showing an entire battery pack according to an embodiment of the present disclosure.
FIG. 2 is an exploded perspective view showing a battery pack according to an embodiment of the present disclosure.
FIG. 3 is a side cross-sectional view of FIG. 1, taken along the line I-I'.
FIG. 4 is a side cross-sectional view of section A in FIG. 3 when viewed from a different direction.
FIG. 5 is a side cross-sectional view showing an open and closed member of FIG. 4 in an open state.
FIG. 6 is a perspective view showing a battery cell of a battery pack according to an embodiment of the present disclosure.
FIG. 7 is a bottom view showing an open and closed member positioned on a bottom plate of a battery pack according to an embodiment of the present disclosure.
FIG. 8 is an enlarged perspective view showing parts of a pack case of a battery pack according to an embodiment of the present disclosure.
FIG. 9 is another side cross-sectional view of FIG. 1, taken along the line I-I'.
FIG. 10 is a cross-sectional view of FIG. 1, taken along the line II-II'.
FIG. 11 is an enlarged side cross-sectional view of section B in FIG. 3.
FIG. 12 is a diagram showing a vehicle according to an embodiment of the present disclosure.

### BEST MODE

Hereafter, embodiments of the present disclosure will be described in detail with reference to the accompanying drawings. Prior to the description, it should be understood that the terms or words used in the specification and the appended claims should not be construed as being limited to general and dictionary meanings, and rather, should be interpreted based on the meanings and concepts corresponding to the technical aspects of the present disclosure on the basis of the principle that the inventor is allowed to define the terms appropriately for the best explanation.

Therefore, the embodiments described herein and the illustrations shown in the drawings are embodiments of the present disclosure to describe the technical aspects of the present disclosure and are not intended to be limiting, so it should be understood that a variety of other equivalents and modifications could be made thereto at the time the application was filed.

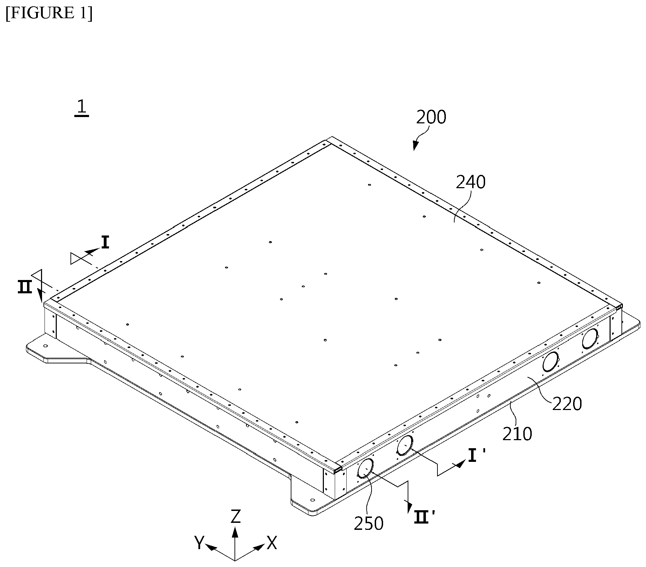

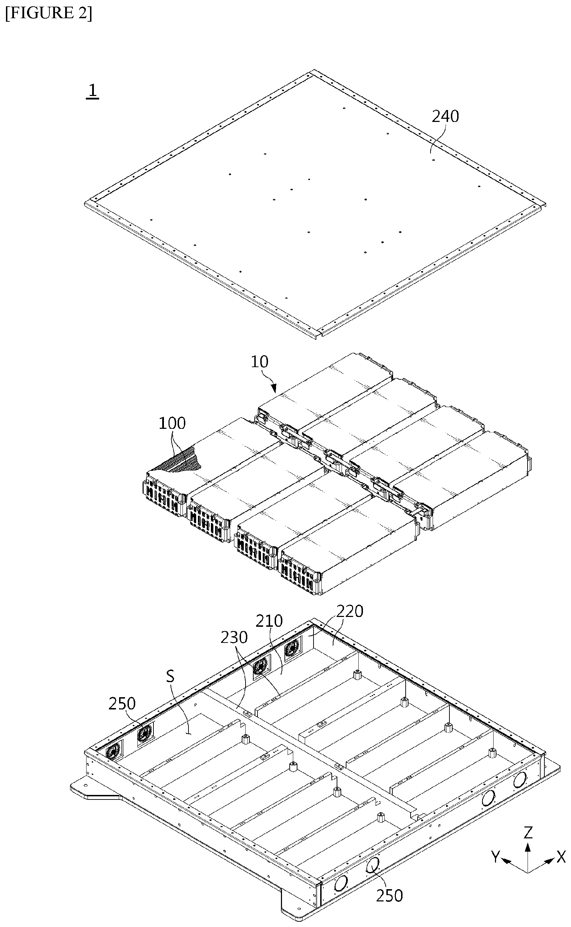

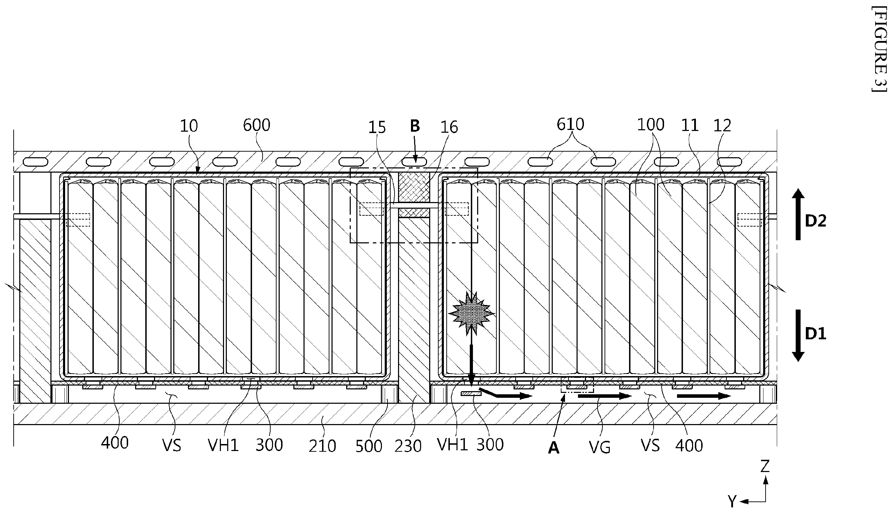

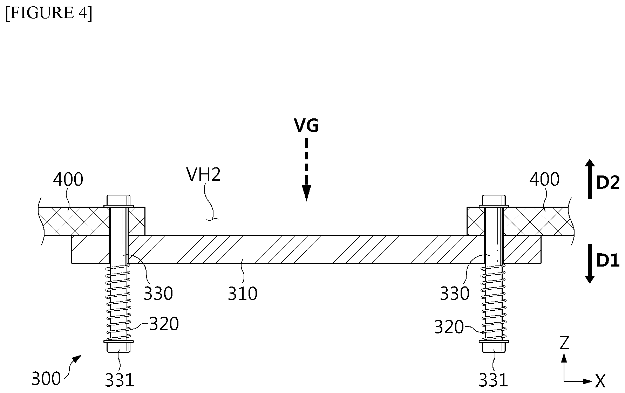

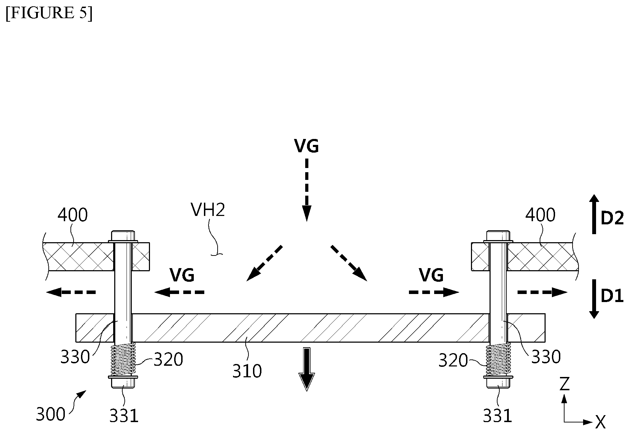

FIG. 1 is a perspective view showing an entire battery pack according to an embodiment of the present disclosure, FIG. 2 is an exploded perspective view showing the battery pack according to an embodiment of the present disclosure, FIG. 3 is a side cross-sectional view of FIG. 1, taken along the line I-I', FIG. 4 is a side cross-sectional view of section A in FIG. 3 when viewed from a different direction, and FIG. 5 is a side cross-sectional view showing an open and closed member of FIG. 4 in an open state.

Hereafter, the battery pack 1 according to an embodiment of the present disclosure will be described in detail with reference to FIGS. 1 to 5. The battery pack 1 according to an embodiment of the present disclosure may include a battery assembly 10, a pack case 200, a first venting hole VH1, a venting space VS and the open and closed member 300.

The battery assembly 10 may include a plurality of battery cells 100. The battery assembly 10 may have a predetermined length, width and height in X, Y and Z directions, respectively. In the battery assembly 10, the plurality of battery cells 100 may be stacked. For example, the plurality of battery cells 100 may be stacked along the width direction of the battery assembly 10 or Y-axis direction while in a standing position in the vertical direction (Z-axis direction). When the plurality of battery cells 100 is positioned as described above, it may be easy to control the venting direction of venting gas VG as described below to any one side.

The pack case 200 may be configured to accommodate the battery assembly 10. The pack case 20 may have a housing space S in which the battery assembly 10 is housed. The pack case 200 may accommodate a plurality of battery assemblies 10.

The first venting hole VH1 may be provided on a first side D1 of the battery assembly 10. The first venting hole VH1 may include at least one first venting hole. Here, the first side D1 may be, for example, understood as a downward direction or -Z direction. The first venting hole VH1 may be a hole through which the venting gas VG may pass. When a thermal event occurs in the battery cell 100 of the battery assembly 10, high-temperature gases, flames and solid ejected materials may be ejected from the battery cell 100, and the high-temperature gases, flames and solid ejected materials may be referred collectively to as venting gas VG. As the first venting hole VH1 may be provided on the first side D1 of the battery assembly 10, when the thermal event occurs in the battery cell 100, the venting gas VG may be released from the battery cell 100 or the battery assembly 10 toward the first side D1.

Meanwhile, the opposite side of the first side D1 may be a second side D2. The second side D2 may be, for example, an upward direction or +Z direction.

The venting space VS may be disposed on the first side D1 of the first venting hole VH1. The venting space VS may be provided in the pack case 200. The venting space VS may be understood as a space in which the venting gas VG flows. The venting space VS may be disposed on the first side D1 of the battery assembly 10. In this instance, the first venting hole VH1 may be positioned between the battery assembly 10 and the venting space VS.

The open and closed member 300 may be disposed corresponding to the first venting hole VH1. The number of open and closed members 300 corresponding to the number of first venting holes VH1 may be provided at locations corresponding to those of the first venting holes VH1. The open and closed member 300 may be provided to cover the first venting hole VH1. The open and closed member 300 may be, for example, disposed on the first side D1 of the first venting hole VH1 as shown in the drawing. Unlike the drawing, the open and closed member 300 may be, for example, disposed on the second side D2 of the first venting hole VH1 (opposite the first side D1) (the second side D2 will be described in detail below).

When an internal pressure of a preset magnitude or more is formed, the open and closed member 300 may be open. Here, the internal pressure may be understood as internal pressure formed by the venting gas VG. When the open and closed member 300 is open, the open and closed member 300 may bring the first venting hole VH1 and the venting space VS into communication with each other. That is, when the open and closed member 300 is opened by the internal pressure, the venting gas VG may be forced into the venting space VS from the battery assembly 10 through the first venting hole VH1.

In the existing battery pack, when venting gas is ejected from a battery cell (or a battery assembly) due to a thermal event, the venting gas may flow back to the same or different battery cell (or battery assembly). As a consequence, the thermal event in the battery cell may get aggravated or spread to other battery cell or battery assembly.

However, by the first venting hole VH1 provided on the first side D1, the battery pack 1 according to the present disclosure may release the venting gas VG generated by the thermal event in the battery cell 100 toward the first side D1, not the second side D2. Moreover, the venting gas VG may be prevented from flowing back to the same or different battery cell 100 (or battery assembly 10). Accordingly, there are remarkable effects that the thermal event in the battery cell 100 may be effectively suppressed, and the thermal event may be effectively prevented from spreading to other battery cell 100 or battery assembly 10.

When the internal pressure of the preset magnitude or more is not formed, the open and closed member 300 may be closed to block the first venting hole VH1 and the venting space VS. In this case, the open and closed member 300 may be kept in the closed state, thereby isolating the first venting hole VH1 from the venting space VS.

When the open and closed member 300 is configured as described above, the open and closed member 300 may be open in the conditions where the internal pressure of sufficient magnitude is formed by the venting gas VG, and otherwise, the open and closed member 300 may be kept in the closed state, thereby releasing the venting gas VG quickly and preventing backflow of the venting gas VG more effectively.

When the internal pressure of less than the preset magnitude is formed, the open and closed member 300 may be placed in close contact with the first venting hole VH1 by the elastic restoring force. When the internal pressure by the venting gas VG is large in magnitude enough to open the open and closed member 300, the open and closed member 300 may elastically deform to allow it to open. When the internal pressure by the venting gas VG is not large in magnitude enough to open the open and closed member 300, the open and closed member 300 may closely contact the first venting hole VH1 by the elastic restoring force.

When the open and closed member 300 is configured as described above, the open and closed member 300 may closely contact the first venting hole VH1 until the internal pressure by the venting gas VG is large in magnitude enough to open the open and closed member 300, thereby further improving the effect of the open and closed member 300 on backflow prevention of the venting gas VG.

The open and closed member 300 may include an open and closed cap 310, a guide pin 330 and an elastic member 320.

The open and closed cap 310 may be movably disposed. The open and closed cap 310 may move in the first side D1 direction or the second side D2 direction. The open and closed cap 310 may, for example, move along the top-bottom direction or Z-axis direction. The open and closed cap 310 may be disposed to cover the first venting hole VH1. The open and closed cap 310 may be disposed on the first side D1 of the first venting hole VH1. When the internal pressure of the preset magnitude or more is formed, the open and closed cap 310 may move toward the first side D1 to allow it to open. When the open and closed member 300 is open, the open and closed member 300 may be open. Meanwhile, when the internal pressure of the preset magnitude or more is not formed, the open and closed cap 310 may be kept in the closed state. In this case, the open and closed cap 310 may closely contact the first venting hole VH1. When the open and closed cap 310 is closed, the open and closed member 300 may be closed.

The guide pin 330 may guide the movement of the open and closed cap 310. The guide pin 330 may extend toward the first side D1 and the second side D2. The guide pin 330 may, for example, extend along the top-bottom direction or Z-axis direction. The movement direction of the open and closed cap 310 and the extension direction of the guide pin 330 may match. At least one guide pin 330 may be provided to one open and closed member 300. The guide pin 330 may be disposed near the edge of the first venting hole VH1. The guide pin 330 may pass through the open and closed cap 310. The guide pin 330 may have, at one end portion, a stopper 331 in a flat or bulge shape to limit the movement of the open and closed cap 310.

The elastic member 320 may be secured to the guide pin 330. The guide pin 330 may pass through the elastic member 320. One end portion of the elastic member 320 may be supported by the stopper 331 of the guide pin 330. The stopper 331 may support one end portion of the elastic member 320 in the second side D2 direction or the upward direction (+Z direction). The other end portion of the elastic member 320 may apply pressure to the open and closed cap 310. The elastic member 320 may be positioned between the stopper 331 of the guide pin 330 and the open and closed cap 310. The elastic member 320 may apply pressure to the open and closed cap 310 in the second side D2 direction or the upward direction (+Z direction).

The elastic member 320 in the compressed state may be positioned between the stopper 331 of the guide pin 330 and the open and closed cap 310. By the restoring force of the compressed elastic member 320, the open and closed cap 310 may be subjected to pressure in the second side D2 direction. When the internal pressure of the venting gas VG is formed in the first venting hole VH1 due to the thermal event in the battery cell 100, in case where the multiplication of the area of the open and closed cap 310 exposed to the venting gas VG in the first venting hole VH1 and the internal pressure of the venting gas VG is greater than the restoring force of the compressed elastic member 320, the open and closed cap 310 may be open. That is, when the force by the internal pressure of the venting gas VG is larger than the force by the compressed elastic member 320, the open and closed cap 310 may be opened (the influence of the weight of the open and closed cap 310 or the elastic member 320 may be taken into account, but its detailed description is omitted.) In contrast, when the internal pressure of the venting gas VG is not large in magnitude enough to open the open and closed cap 310, the elastic member 320 may push the open and closed cap 310 toward the second side D2 to bring the open and closed cap 310 into close contact with the first venting hole VH1.

Accordingly, when the open and closed member 300 includes the above-described components, the present disclosure may open the first venting hole VH1 only when the internal pressure of the preset magnitude or more is formed by the venting gas VG, and otherwise, may strongly close the first venting hole VH1, thereby preventing the venting gas VG from flowing back to the same or different battery cell 100 (or battery assembly 10) more effectively. Moreover, the present disclosure may apply the elastic member 320 having a different elastic modulus or change the compression length of the elastic member 320, thereby allowing design modification to appropriately adjust the magnitude of the internal pressure of the venting gas VG to open the open and closed member 300.

Meanwhile, the elastic member 320 may be provided as a spring having elasticity. For example, the elastic member 320 may be provided as a coil spring, or may be provided as a different type of spring, for example, a plate spring.

The open and closed cap 310 may include a material having rigidity and fire resistance. For example, the open and closed cap 310 may include mica having fire resistance. For example, the open and closed cap 310 may include rigid mica having fire resistance as well as sufficient rigidity.

As described above, when the open and closed cap 310 includes a material having rigidity and fire resistance, there is an advantage that the open and closed cap 310 does not melt or break and can maintain its shape when it is directly exposed to high temperature and high pressure venting gas VG in the first venting hole VH1.

The first side D1 may be the downward direction. The downward direction may be, for example, -Z direction. When the first side D1 is the downward direction, the first venting hole VH1 may be provided under the battery assembly 10, and the venting space VS may be disposed under the first venting hole VH1.

In the case of a vehicle including the battery pack 1, a driver or passenger(s) is generally located above the battery cells 100, and when the thermal event occurs, the release of the venting gas VG upwards above the battery cell 100 may threaten safety of the passenger. Accordingly, as in the present disclosure, when the first venting hole VH1 is provided under the battery cell 100 or the battery assembly 10 and the venting space VS is disposed under the first venting hole VH1, the venting gas VG may be guided downward to the opposite side to the passenger.

Meanwhile, the battery assembly 10 may include an assembly housing 11. The assembly housing 11 may accommodate the plurality of battery cells 100. The assembly housing 11 may form the entire shape of the battery assembly 10. The first venting hole VH1 may be, for example, present on the first side D1 of the assembly housing 11.

Meanwhile, the plurality of battery cells 100 may be stacked along the width direction of the assembly housing 11 or Y-axis direction, and a barrier 12 may be positioned between any two battery cells 100. The barrier 12 may include an elastic material to absorb swelling, and may include a heat or flame barrier material.

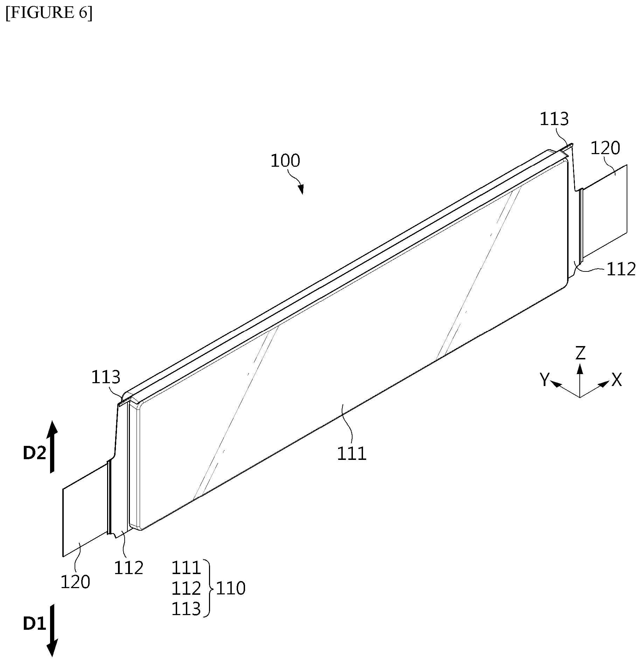

FIG. 6 is a perspective view showing the battery cell of the battery pack according to an embodiment of the present disclosure.

Meanwhile, the battery cell 100 that may be applied to the battery pack 1 according to an embodiment of the present disclosure will be described in detail with reference to FIG. 6.

The battery cell 100 according to the present disclosure may include a cell case 110. The cell case 110 may accommodate an electrode assembly including a stack of a positive electrode, a negative electrode and a separator. The cell case 110 may include a housing portion 111, a sealing portion 112 and a folding portion 113. The electrode assembly may be housed in the housing portion 111. The sealing portion 112 is where at least a part of the edge of the housing portion 111 is sealed, and for example, when the housing portion 111 is approximately rectangular in shape, the sealing portion 112 may be disposed on three sides of the four sides (edges) of the housing portion 111, and may not be disposed at the lower part (-Z direction part). The folding portion 113 is where a part of the sealing portion 112 is folded, and may be, for example, disposed at the upper part (+Z direction part) of the housing portion 111. The battery cell 100 may have an electrode lead 120. The electrode lead 120 may protrude toward two sides (for example, +X direction and/or -X direction) of the battery cell 100. The electrode lead 120 may be electrically connected to the electrode assembly, and protrude toward two sides of the battery cell 100.

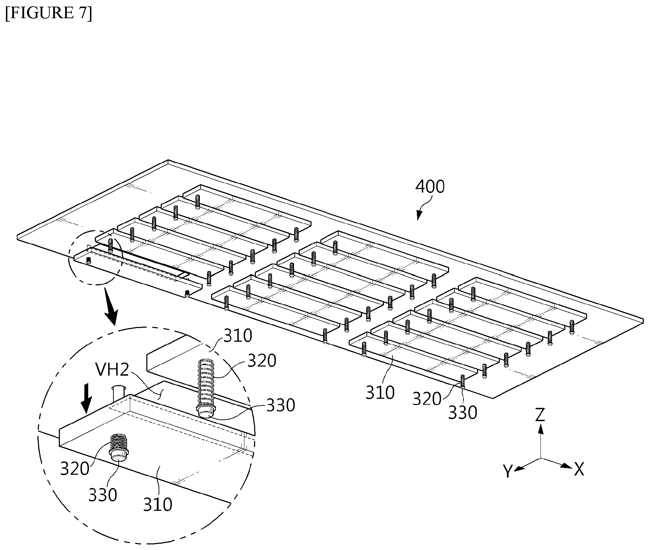

FIG. 7 is a bottom view showing the open and closed member positioned on a bottom plate of the battery pack according to an embodiment of the present disclosure.

Hereinafter, the bottom plate 400 of the battery pack 1 according to an embodiment of the present disclosure will be described in detail with reference to FIGS. 1 to 5 and 7.

The battery pack 1 according to the present disclosure may further include the bottom plate 400. The bottom plate 400 may be positioned between the battery assembly 10 and the pack case 200. The bottom plate 400 may be disposed on the first side D1 of the battery assembly 10. The bottom plate 400 may be disposed on the second side D2 of the venting space VS. The bottom plate 400 may form the venting space VS together with a bottom portion 210 of the pack case 200 as described below.

The bottom plate 400 may have a second venting hole VH2. The second venting hole VH2 may correspond to the first venting hole VH1. For example, the number of second venting holes VH2 corresponding to the number of first venting holes VH1 may be provided at locations corresponding to those of the first venting holes VH1. The second venting hole VH2 may have a shape that is identical or approximately similar to that of the first venting hole VH1. The second venting hole VH2 may be smaller in size than the first venting hole VH1. Each of the second venting hole VH2 and the first venting hole VH1 may have a predetermined length and width, and at least one of the length or the width of the second venting hole VH2 may be smaller than at least one of the length or the width of the first venting hole VH1.

The open and closed member 300 may be coupled to a location corresponding to the second venting hole VH2 on the first side D1 of the bottom plate 400. When the magnitude of internal pressure of the venting gas VG is not large enough to open the open and closed member 300, the open and closed member 300 may closely contact the first side D1 of the bottom plate 400 to apply pressure to the bottom plate 400. In contrast, when the magnitude of internal pressure of the venting gas VG is large enough to open the open and closed member 300, the open and closed member 300 may move from the bottom plate 400 in the first side D1 direction facing away from the bottom plate 400, and the venting gas VG may move to the venting space VS through the first venting hole VH1 and the second venting hole VH2.

When the battery according to the present disclosure further includes the bottom plate 400, the bottom plate 400 combined with the open and closed member 300 may be additionally positioned between the battery assembly 10 and the pack case 200, making it easy to apply the open and closed member 300 to the battery pack 1, thereby improving the productivity and assembly efficiency of the battery pack 1. In addition, by the bottom plate 400, the venting space VS may be formed more effectively and hermetically.

The bottom plate 400 may include a material having rigidity and fire resistance. For example, the bottom plate 400 may include mica having fire resistance. For example, the bottom plate 400 may include rigid mica having fire resistance as well as sufficient rigidity.

As described above, when the bottom plate 400 includes a material having rigidity and fire resistance, there is an advantage that the bottom plate 400 does not melt or break and can maintain its shape when exposed to high-temperature, high-pressure venting gas VG.

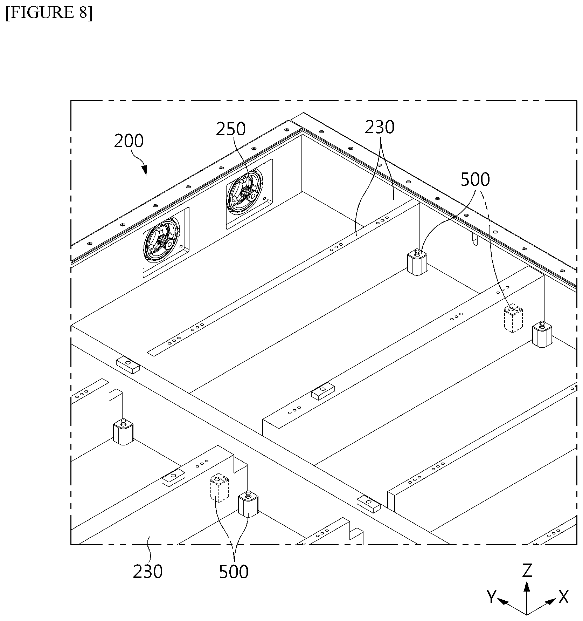

FIG. 8 is an enlarged perspective view showing parts of the pack case of the battery pack according to an embodiment of the present disclosure.

Hereinafter, a mounting block 500 of the battery pack 1 according to an embodiment of the present disclosure will be described in detail with reference to FIGS. 3 and 8.

The battery pack 1 according to an embodiment of the present disclosure may further include the mounting block 500 positioned between the battery assembly 10 and the pack case 200. The mounting block 500 may be disposed on the first side D1 of the battery assembly 10. The mounting block 500 may be, for example, disposed under the battery assembly 10 or in -Z direction. The mounting block 500 may be disposed at a location corresponding to the edge of the battery assembly 10. The mounting block 500 may be, for example, disposed at a location corresponding to each corner of the battery assembly 10 on the bottom portion 210 of the pack case 200 as described below.

The mounting block 500 may support the battery assembly 10 towards the second side D2. For example, the mounting block 500 may support the battery assembly 10 in the upward direction or +Z direction. The mounting block 500 may separate the battery assembly 10 from the pack case 200. For example, by the mounting block 500, the battery assembly 10 and the pack case 200 may be separated from each other in the upward direction or Z-axis direction.

The mounting block 500 may separate the battery assembly 10 from the pack case 200 to form the venting space VS. Accordingly, when the battery pack 1 according to the present disclosure further includes the mounting block 500, there is an advantage that the venting space VS may be formed more easily and effectively.

Hereinafter, a cooling member 600 of the battery pack 1 according to an embodiment of the present disclosure will be described in detail with reference back to FIG. 3.

The battery pack 1 according to the present disclosure may further include the cooling member 600. The cooling member 600 may be disposed on the second side D2 of the battery assembly 10. As described above, the second side D2 may be the opposite side to the first side D1. The cooling member 600 may be configured to cool the battery assembly 10.

When the cooling member 600 is disposed on the second side D2 of the battery assembly 10, the venting gas VG from the battery cell 100 may be prevented from moving to the second side D2 of the battery assembly 10.

When the cooling member 600 disposed on the second side D2 of the battery assembly 10 is further included, rapid venting of the venting gas VG to the first side D1 of the battery assembly 10 and cooling of the battery assembly 10 on the second side D2 of the battery assembly 10 may be achieved at the same time, thereby preventing and suppressing the thermal event in the battery cell 100 more effectively.

Meanwhile, the cooling member 600 may have at least one cooling channel 610. A cooling medium may flow in the cooling channel 610.

The second side D2 may be the upward direction. The upward direction may be, for example, +Z direction. When the second side D2 is the upward direction, the cooling member 600 may be provided on the battery assembly 10.

In the case of the existing battery pack 1, the venting gas VG may be released in the upward direction. In this case, the venting gas VG may be likely to flow to other battery assembly 10 or battery cell 100. In addition, another component such as a pack cover 240 as described below may be disposed on the pack case 200, and when the venting gas VG is released upwards, the component such as the pack cover 240 may melt or break.

However, when the second side D2 is the upward direction, the venting gas VG from the battery cell 100 may be prevented from moving upward above the battery assembly 10, thereby releasing the venting gas VG downwards below the battery assembly 10 more quickly. As a result, it may be possible to reduce the likelihood that the venting gas VG will flow to another location, and reduce the risk that the component such as the pack cover 240 will melt or break.

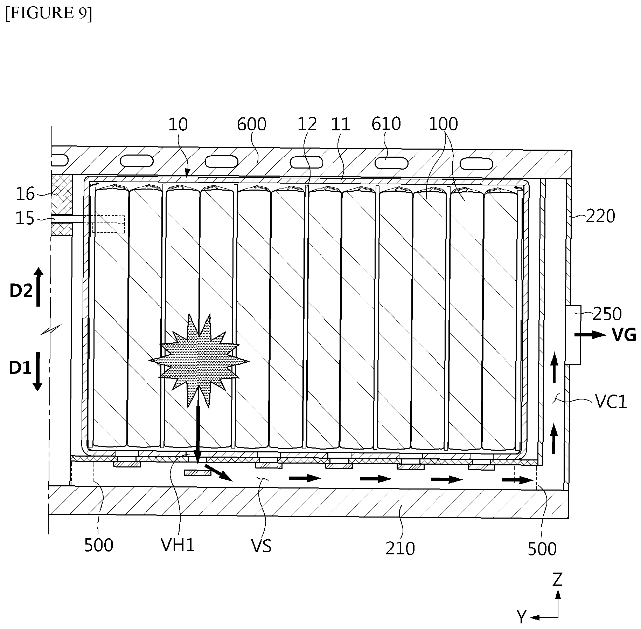

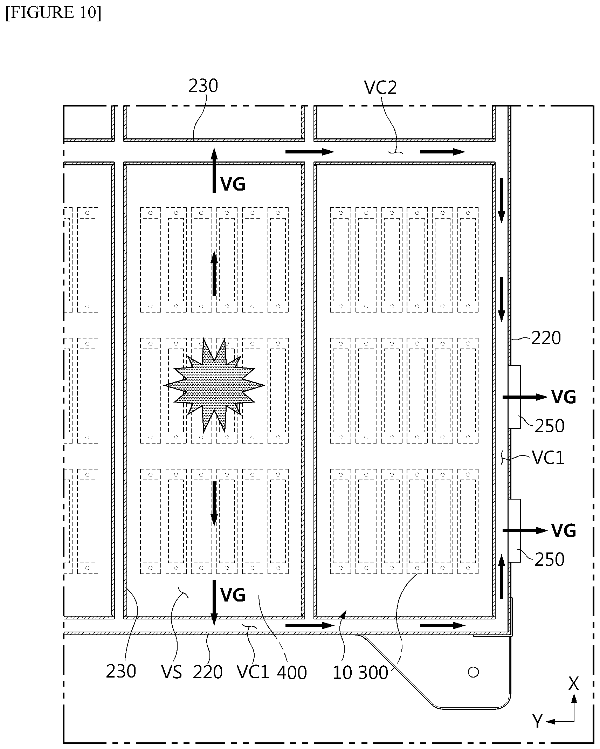

FIG. 9 is another side cross-sectional view of FIG. 1, taken along the line I-I', and FIG. 10 is a cross-sectional view of FIG. 1, taken along the line II-II'.

Hereinafter, the battery pack 1 according to an embodiment of the present disclosure will be described in more detail with reference to FIGS. 9 and 10.

The pack case 200 may include a sidewall portion 220. The sidewall portion 220 may surround the housing space S of the pack case 200. The sidewall portion 220 may be disposed at the edge of the pack case 200. Accordingly, the battery assembly 10 may be disposed inside the sidewall portion 220 in the pack case 200. The sidewall portion 220 may have a first venting channel VC1. The first venting channel VC1 may be present inside the sidewall portion 220. The venting gas VG may flow in the first venting channel VC1. The first venting channel VC1 may be in communication with the venting space VS.

As described above, when the sidewall portion 220 has the first venting channel VC1, the venting gas VG may flow to the first venting channel VC1 through the venting space VS. As the battery assembly 10 may be disposed inside the sidewall portion 220, the sidewall portion 220 may be disposed outside the battery assembly 10. Accordingly, when the sidewall portion 220 has the first venting channel VC1, the venting gas VG may flow at the outside of the battery assembly 10.

The pack case 200 may include a partition frame 230. The partition frame 230 may partition the inside of the housing space S of the pack case 200. The partition frame 230 may be disposed inside the edge of the pack case 200. The partition frame 230 may be disposed inside the sidewall portion 220. The battery assembly 10 may be positioned between the sidewall portion 220 and the partition frame 230 or between two adjacent partition frames 230. The partition frame 230 may have a second venting channel VC2. The second venting channel VC2 may be present inside the partition frame 230. The venting gas VG may flow in the second venting channel VC2. The second venting channel VC2 may be in communication with the venting space VS.

As described above, when the partition frame 230 has the second venting channel VC2, the venting gas VG may flow to the second venting channel VC2 through the venting space VS. As the battery assembly 10 may be positioned between the sidewall portion 220 and the partition frame 230 or between two adjacent partition frames 230, the partition frame 230 may be disposed outside the battery assembly 10. Accordingly, when the partition frame 230 has the second venting channel VC2, the venting gas VG may flow at the outside of the battery assembly 10.

The pack case 200 may include a venting device 250. The venting device 250 may bring the venting space VS and the outside into communication with each other. The venting device 250 may be configured to release the venting gas VG to the outside. The venting device 250 may be simply in a shape of a hole that penetrates the pack case 200. Alternatively, the venting device 250 may be configured to keep closed in a normal condition, and open when a change in pressure or temperature inside the pack case 200 occurs.

The venting device 250 may be disposed in the sidewall portion 220. The venting device 250 may include a plurality of venting devices. The venting device 250 may be in communication with the first venting channel VC1. The venting device 250 may be in communication with the second venting channel VC2.

As described above, when the pack case 200 further includes the venting device 250, there is an advantage that the venting gas VG flowing in the venting space VS may be released from the pack case 200 into the atmosphere more quickly.

Meanwhile, the pack case 200 may further include the bottom portion 210 and the pack cover 240. The bottom portion 210 may form the bottom of the pack case 200. The bottom portion 210 may form the bottom of the housing space S. The sidewall portion 220 may surround the bottom portion 210 and form the housing space S together with the bottom portion 210. The pack cover 240 may be disposed to cover the housing space S. The pack cover 240 may be coupled to the sidewall portion 220 or the partition frame 230.

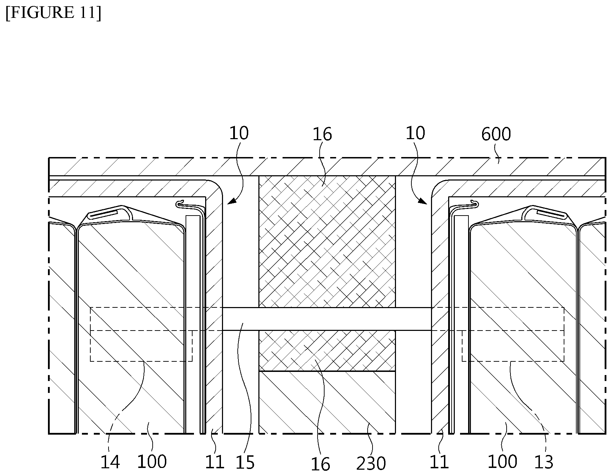

FIG. 11 is an enlarged side cross-sectional view of section B in FIG. 3.

Hereinafter, a connection busbar 15 of the battery pack 1 according to an embodiment of the present disclosure will be described in detail with reference to FIG. 11.

The battery pack 1 may further include the connection busbar 15. When the pack case 200 accommodates the plurality of battery assemblies 10, the connection busbar 15 may electrically connect any one of the battery assemblies 10 to the other. For example, the connection busbar 15 may electrically connect a negative terminal 13 of any one battery assembly 10 to a positive terminal 14 of the other battery assembly 10.

In this instance, the connection busbar 15 may run across the partition frame 230 positioned between two battery assemblies 10. The connection busbar 15 may be sealed by a sealing member 16. The sealing member 16 may be, for example, positioned between the connection busbar 15 and the partition frame 230. The sealing member 16 may be, for example, positioned between the connection busbar 15 and the pack cover 240.

The sealing member 16 may include a fire resistant material to shield against heat or flames. The sealing member 16 may include a rubber or a foam for sealing purposes.

When the connection busbar 15 connects two battery assemblies 10 to each other, a gap may be formed between the two battery assemblies 10. However, when the sealing member 16 is included, the sealing member 16 may seal the gap. In this case, the venting gas VG may be prevented from flowing from any one battery assembly 10 to the other battery assembly 10 through the connection busbar 15, or vice versa.

The above description presents examples of the battery pack 1 according to the present disclosure. The technical aspects of the present disclosure are not limited to these examples, and may include a combination of any two or more thereof.

Although not shown, the battery pack 1 according to the present disclosure may further include a variety of devices to control the charge and discharge of the battery cells 100, for example, a Battery Management System (BMS), a current sensor or a fuse.

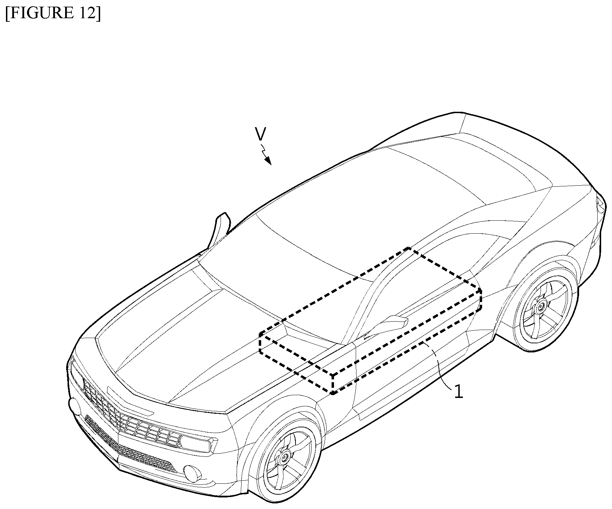

FIG. 12 is a diagram showing a vehicle according to an embodiment of the present disclosure.

Hereinafter, referring to FIG. 12, the battery pack 1 according to the present disclosure may be applied to the vehicle V such as an electric vehicle or a hybrid electric vehicle. That is, the vehicle V according to the present disclosure may include the battery pack 1 according to the present disclosure. The battery pack 1 may be installed in a vehicle body frame under a vehicle seat or a trunk space. In addition to the battery pack 1, the vehicle V according to an embodiment of the present disclosure may further include any other component included in the vehicle. For example, in addition to the battery pack 1 according to an embodiment of the present disclosure, the vehicle V according to an embodiment of the present disclosure may further include a vehicle body, a motor or a controller such as an electronic control unit (ECU).

In addition, in addition to the vehicle V, the battery pack 1 according to an embodiment of the present disclosure may be used in any other device, apparatus and machine using secondary batteries, for example, energy storage systems.

In this specification, the terms indicating the directions such as up, down, left, right, front and rear are used, but these terms are for the purpose of convenience of description only, and it is obvious to those skilled in the art that the terms may differ depending on the location of an object or an observer.

Although the present disclosure has been hereinabove described with regard to certain embodiments and drawings, the present disclosure is not limited thereto, and it is apparent that a variety of modifications and change may be made by persons having ordinary skill in the technical field pertaining to the present disclosure within the technical aspects of the present disclosure and the appended claims and their equivalents.

### [List of Reference Numerals]

1: Battery pack
10: Battery assembly
11: Assembly housing
12: Barrier
13: Negative terminal
14 : Positive terminal
15: Connection busbar
16: Sealing member
100: Battery cell
110: Cell case
111: Housing portion
112: Sealing portion
113: Folding portion
120: Electrode lead
200: Pack case
210: Bottom portion
220: Sidewall portion
230: Partition frame
240: Pack cover
250: Venting device
300: Open and closed member
310: Open and closed cap
320: Elastic member
330: Guide pin
331: Stopper
400: Bottom plate
500: Mounting block
600: Cooling member
61 0: Cooling channel
D1: First side
D2: Second side
S: Housing space
VG: Venting gas
VH1: First venting hole
VH2 : Second venting hole
VS: Venting space
VC1: First venting channel
VC2: Second venting channel
V: Vehicle

## Claims

1. A battery pack comprising:
a battery assembly including a plurality of battery cells;
a pack case having a housing space in which the battery assembly is housed;
at least one first venting hole provided on a first side of the battery assembly;
a venting space disposed on the first side of the first venting hole and provided in the pack case; and
at least one open and closed member configured to be opened to bring the first venting hole and the venting space into communication with each other in response to an internal pressure of a preset magnitude or more being formed, the open and closed member being disposed corresponding to the first venting hole.

2. The battery pack according to claim 1,
wherein the open and closed member is closed to block the first venting hole and the venting space in response to the internal pressure of less than the preset magnitude being formed.

3. The battery pack according to claim 2,
wherein the open and closed member is placed in close contact with the first venting hole by an elastic restoring force in response to the internal pressure of less than the preset magnitude being formed.

4. The battery pack according to claim 1,
wherein the open and closed member includes:
an open and closed cap disposed movably;
a guide pin configured to guide the movement of the open and closed cap; and
an elastic member secured to the guide pin and configured to apply pressure to the open and closed cap.

5. The battery pack according to claim 4,
wherein the open and closed cap includes a material having rigidity and fire resistance.

6. The battery pack according to claim 1, further comprising:
a bottom plate disposed between the battery assembly and the pack case, the bottom plate having a second venting hole corresponding to the first venting hole,
wherein the open and closed member is coupled to a location corresponding to the second venting hole on the first side of the bottom plate.

7. The battery pack according to claim 6,
wherein the bottom plate includes a material having rigidity and fire resistance.

8. The battery pack according to claim 1,
wherein the first side is a downward direction.

9. The battery pack according to claim 1, further comprising:
a mounting block disposed between the battery assembly and the pack case,
wherein the mounting block separates the battery assembly from the pack case to form the venting space.

10. The battery pack according to claim 1,
wherein a direction opposite to the first side is a second side, and
wherein the battery pack further comprises a cooling member disposed on the second side of the battery assembly, the cooling member configured to cool the battery assembly.

11. The battery pack according to claim 10,
wherein the second side is an upward direction.

12. The battery pack according to claim 1,
wherein the pack case includes a sidewall portion surrounding the housing space, and
wherein the sidewall portion has a first venting channel in communication with the venting space.

13. The battery pack according to claim 1,
wherein the pack case includes a partition frame to partition the housing space, and
wherein the partition frame has a second venting channel in communication with the venting space.

14. The battery pack according to claim 1,
wherein the pack case includes a venting device to connect the venting space to an outside.

15. The battery pack according to claim 1,
wherein the pack case includes a partition frame to partition the housing space,
wherein the housing space accommodates a plurality of battery assemblies, and
wherein the battery pack further comprises:
a connection busbar running across the partition frame, the connection busbar configured to electrically connect any one of the battery assemblies to the other; and
a sealing member to seal the connection busbar.

16. A vehicle comprising at least one battery pack according to any one of claims 1 to 15.
